# EUROPEAN PATENT SPECIFICATION

(11) **EP 3 492 797 B1**
(45) Date of publication and mention of the grant of the patent: **18.09.2024**
(21) Application number: 19000002.6
(22) Date of filing: 13.05.2014
(51) Int. Cl.: F16L 59/20, F16L 47/22, F16L 59/16, B29C 65/02, B29C 65/66, B29C 65/00, B29K 75/00, B29L 23/00

(54) **THERMALLY INSULATED TUBE WITH REDUCED MOISTURE MIGRATION**
THERMISCH ISOLIERTES ROHR MIT VERRINGERTER FEUCHTIGKEITSMIGRATION
TUBE ISOLÉ THERMIQUEMENT AVEC MIGRATION D'HUMIDITÉ RÉDUITE

(30) Priority: 14.05.2013 NL 1040210
(43) Date of publication of application: 05.06.2019
(62) Divisional of application: 14727950.9
(73) Proprietor: Rombouts Kunststof Techniek B.V., 4691 RZ Tholen (NL)
(72) Inventor: Rombouts, Cornelis Christianus, 4614 GK Bergen op Zoom (NL)
(74) Representative: Griebling, Onno

(56) References cited:
- EP-A1- 0 070 065
- EP-A1- 0 188 363
- WO-A1-03/095887
- WO-A1-2012/051719
- WO-A1-84/03346
- DE-A1- 10 211 703
- DE-A1- 3 720 577
- GB-A- 2 319 316
- US-B1- 6 978 807
- US-B1- 7 028 717

## Description

### FIELD OF THE INVENTION

The invention relates in general to insulated tubes. More particularly, the invention relates to tubes which, in their operative condition, are buried in the ground, and the invention will be specifically explained for such tubes, but the invention is also applicable to non-buried tubes.

### BACKGROUND OF THE INVENTION

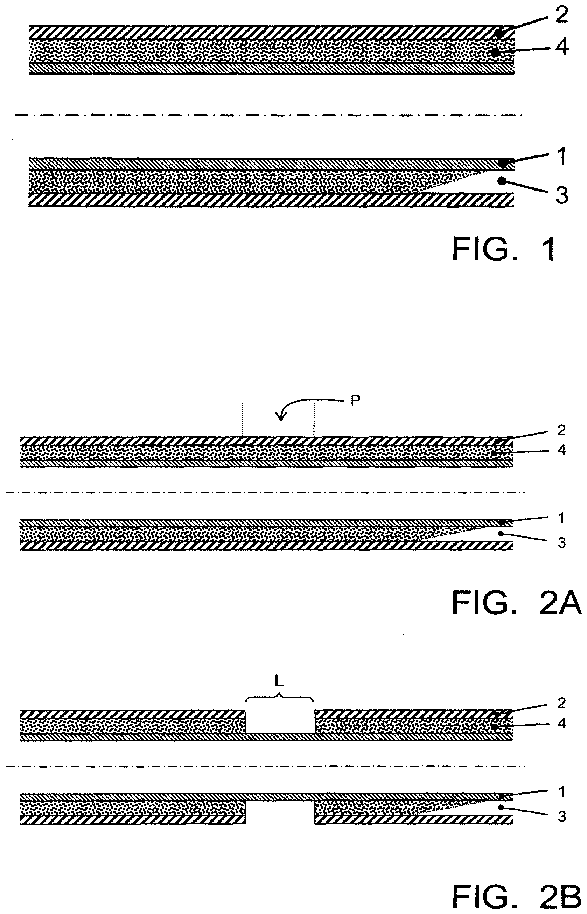

It is fairly common that transport tubes for transporting a gas or liquid are buried in the ground, in which case the depth below ground surface may be many meters. Especially when the medium to be transported has a temperature which deviates substantially from the ground temperature, for instance in the case of a warm water network or a steam network, or for other reasons, the tube is then provided with a thermally insulating casing. The insulating casing may also have the function of electrical insulation or sound insulation. The material of the tube is often steel, but may also be plastic, for instance PE or PP. Especially PE 100 is an often used material. As schematically illustrated in figure 1, a second tube 2 is arranged around the transporting tube 1, which second tube will be indicated as "outer tube". The inner diameter of the outer tube 2 is larger than the outer diameter of the transporting tube 1, and the annular space 3 between both tubes is filled with an insulation material 4, which usually is a PU-foam. The system is designed such that there is good adherence between the PU-foam 4 and the transporting tube 1, and such that there is a good adherence between the PU-foam 4 and the outer tube 2; if necessary, to this end a pre-treatment has been applied to the inner surface of the outer tube 2 and/or to the outer surface of the transporting tube 1, but this pre-treatment is known per se and is outside the context of the present invention, so that it will not be discussed further. It is noted that, in the case of a steel transporting tube 1, the outer surface of the transporting tube 1 is provided with a corrosion resistant coating, also known per se.

It should be clear that the thickness of the PU-foam 4 layer is chosen depending on the insulation requirements.

GB-2.319.316 discloses a heat-shrinkable member for connecting tubular sections consisting of an inner pipe (17), a pipe jacket (18), and an insulating foam (16) in between. Inner pipes (17) are joined (19) by welding. A sleeve (10) is arranged over the end portions of the jacket (18) spanning the weld (19). The space under the sleeve (10) is filled with a liquid precursor of a foam to restore protection and insulation of the welded inner pipes (17).

When the transporting tube is lying in a moist surroundings, such as for instance when the ground is moist or when the tube is lying in the ground water, and when for any reason there is damage (leakage) in the outer tube 2, water or moisture can reach the PU-foam 4 through the outer tube 2. The penetrating moisture/water quickly migrates through the entire insulation material, which becomes saturated. As a result, in any case the insulating properties of the PU-foam 4 will reduce drastically. Above that, the PU-foam 4 itself may be affected by the water/moisture; PU-foam usually is not resistant against hydrolysis. Then, a consequence is that, even in the case of a relatively small leakage in the outer tube 2, the complete insulation casing (outer tube 2 plus PU-foam 4) must be replaced, in any case over a certain length. The more time has lapsed between the occurrence of the leakage and the repair, the larger the length that needs to be replaced. In case the transporting tube 1 is a steel tube, the transporting tube 1 may in the meantime have been affected by the moisture; in that case it is even necessary to replace the entire tube, in any case over a certain length. This may also be necessary if replacing the insulation casing is more labour intensive and expensive than replacing a part of the entire tube. A complicating factor here is that it is not always clear, or easy to assess, how far the damage has extended itself in the meantime and thus how much tube one needs to replace, so that out of necessity one often replaces an unnecessarily large part of the tube.

GB-2.319.316 is silent about the above-mentioned problem.

WO03/095887 discloses a method for the field insulation of connecting joints for fluid transport pipelines, involving positioning a cylindrical mold shaped around extremities of metallic tubes to obtain a hollow space, pouring a sealing resin into the mold, and removing the mold.

### SUMMARY OF THE INVENTION

An important objective of the present invention is eliminating or at least reducing the said problem. This objective is obtained by the measures of claim 1. Briefly said, a water barrier is arranged in one or multiple positions, which interrupts the PU-foam in axial direction (i.e. length direction of the transporting tube). Any moisture that possibly penetrated the PU-foam can then migrate in axial direction not further than up to the first water barrier. Not only does this actually prevent a further extension of the damage, but it is now also possible to indicate with certainty a place where the damage has not passed. The shorter the mutual distance between successive water barriers, the shorter the length of the tube parts which should be replaced.

### BRIEF DESCRIPTION OF THE DRAWINGS

These and other aspects, features and advantages of the present invention will be further clarified by the following description of one or more exemplary embodiments with reference to the drawings, in which same reference numerals indicate same or similar parts, in which indications "under/above", "higher/lower", "left/right" etcetera exclusively relate to the orientation shown in the figures, and in which:
figure 1 shows a schematic longitudinal cross-section of a part of an insulated transporting tube;
figures 2A-2B schematically illustrate the initial steps of a process of applying a water barrier in an insulated transporting tube;
figures 3A-3B schematically illustrate welding of tube segments;
figures 4A-4B schematically illustrate axially shifting a cylindrical sleeve;
figures 5A-5C schematically illustrate shaping a sleeve by winding a plate;
figures 6A-6B schematically illustrate the process of filling the sleeve;
figure 7 schematically illustrates a water barrier.

### DETAILED DESCRIPTION OF THE INVENTION

Figure 2A schematically shows a thermally insulated transporting tube 1, comparable to figure 1, which at a certain position P needs to be provided with a water barrier according to the present invention. The way in which this position P has been determined is of no relevance to the present invention.

Figure 2B schematically illustrates that, as first step in order to arrive to the thermally insulated transport tube according to the present invention, the outer tube 2 and the PU-foam 4 have been removed over the full circumference of the transporting tube 1 and over an axial length L, which is not critical and which for instance may be chosen in the range from 5 to 30 cm. A larger length is also allowed, but will in general not be necessary for obtaining a better effect. A smaller length is also allowed, but it is wise to choose this length not too small. It is clearly visible that the transporting tube 1 is exposed in the area where the insulation casing has been removed.

The situation of figures 2A and 2B discussed above can occur in the case of existing tubes, even in the case of tubes which are already buried (repair), but can also occur in the case of new tubes that need to be placed (preventively).

A transporting conduit, which may be many kilometres long, is built in situ from prefabricated tube segments. These tube segments have a certain standard length which may for instance be 6 meter but which also may be 20 meter. They are manufactured in a plant, transported to the building site and welded together there. On manufacture in the plant, both ends of the tube segment are always left free, or the insulating casing is, after manufacture, removed at each end over a length of for instance about 20 cm. This removal may be done in the plant, or at the building site.

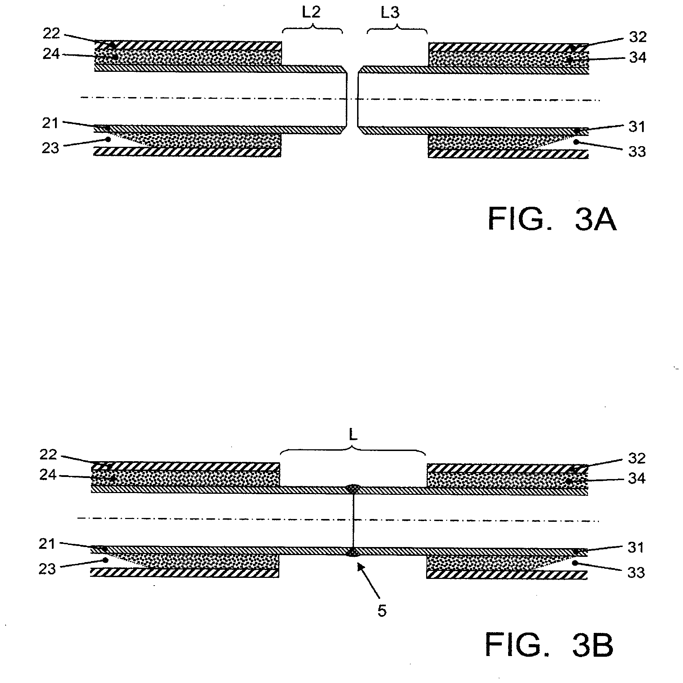

Figure 3A shows two end parts of two transport tube segments 21, 31, which are placed opposite each other to be welded together. Each tube segment 21, 31 is provided with an insulation casing with an outer tube 22, 32 and a PU-foam filling 24, 34 of the annular intermediate space 23, 33. At the end parts, the insulating casing is removed, or in any case absent, over a length L2 and L3, respectively, of for instance about 20 cm.

Figure 3B shows the same two end segments of the same two transporting tube segments 21, 31 after the transporting tubes segments 21, 31 have been welded together by a weld 5.

It may be clear that the situation now achieved is comparable to the situation of figure 2B, i.e. a contiguous transporting tube 21/31 of which the insulating casing is interrupted over a length L.

As next step in order to arrive to the thermally insulated transport tube according to the present invention, a thermoplastic shrink sleeve 40 is arranged over the area where the insulation casing is absent. The shrink sleeve 40 has an axial length larger than the length L of the interruption in the insulation casing, and has an inner diameter that is slightly larger than the outer diameter of the outer tube 2. Depending on circumstances, the thickness is for instance about 3 mm - 50 mm.

In the situation of figures 3A-3B, where new tube segments are welded together or wherein a repair segment is welded into an existing conduit, one can use a cylindrical sleeve as shrinking sleeve. This cylindrical sleeve is shifted on one of the tube segments before the tube segments are welded together, and in that case the cylindrical sleeve can simply be shifted in axial direction after welding in order to be placed over the interruption zone. In the situation of figures 2A-2B, where a piece of casing is removed from an existing tube, the shrinking sleeve is formed by folding a piece of plate material around the tube. It is of course also possible to fold a piece of plate material around the tube in the case of the situation of figures 3A-3B.

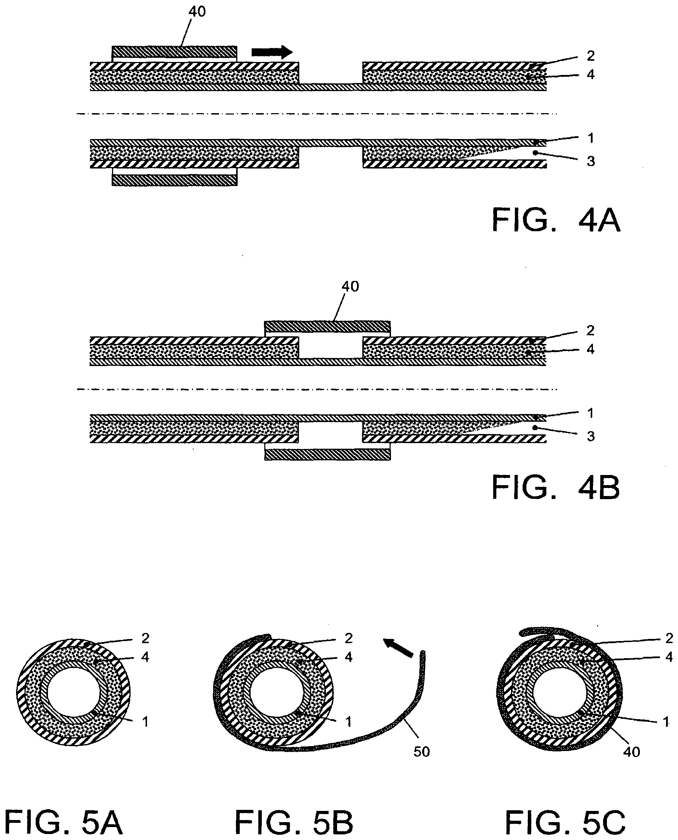

Figures 4A-4B schematically illustrate the axial shifting of a cylindrical sleeve 40.

Figures 5A-5C schematically illustrate winding a plate 50 in order to thus form a sleeve 40. The ends of the plate 50 that overlap each other are fixed together, for instance by welding.

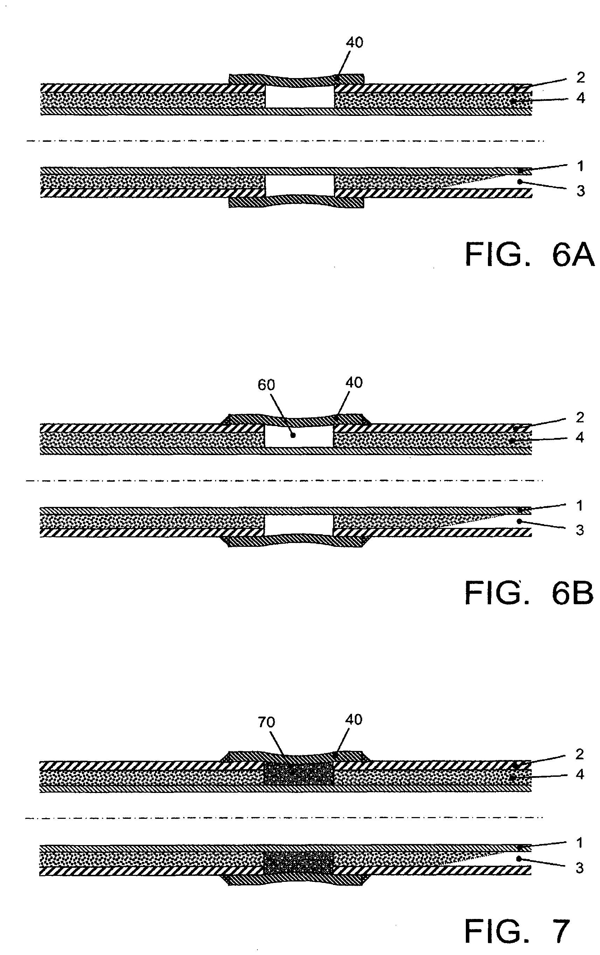

As a next step in order to arrive to the thermally insulated transport tube according to the present invention, the shrink sleeve 40 is heated, to a temperature fitting to the material of the shrink sleeve 40, to thus make the shrink sleeve shrink. The diameter of the shrink sleeve decreases here. The diameter reduction may for instance be 10% or more, depending on the chosen material. The original inner diameter of the shrink sleeve 40 was about equal to (figure 5C) or less than 10% larger than (figure 4A) the outer diameter of the outer tube 2, so that after executing the heating step the shrink sleeve 40 is clamped firmly around the outer tube 2 (see figure 6A).

Preferably, the axial end edges of the shrink sleeve 40 are subsequently welded to the outer tube 2, in order to obtain a good watertight joint between the outer tube 2 and the shrink sleeve 40 (see figure 6B).

The welding method used herein is not critical, but as an example the materials can be melted together by means of a hot gas, or melted plastic material in the form of an extrusion seam may be supplied.

Between the shrunk shrink sleeve 40 and the transport tube 1, an annular space 60 has now come into being, which is confined in axial direction by the outer tube 2 and the PU-foam 4. As next step in order to arrive to the thermally insulated transport tube according to the present invention, this annular space 60 is filled with a hardening material 70. Filling is done in liquid form. To this end, first a hole (or multiple holes) is made in the shrink sleeve 40, through which the liquid material is inserted. This hole may be made at the upper side, so that the liquid material can simply be poured into the annular shape 60 through a funnel. It is also possible that the hole (or multiple holes) is made at the lower side, so that the liquid material is injected or pumped up into the annular shape 60; in this case, a hole (or multiple holes) may then also be made at the upper side to allow air to escape from the annular space 60. Preferably, venting is stimulated by connecting a vacuum pump to the hole at the upper side. After hardening of the filling material 70, the hole is/the holes are closed by welding.

The filling material is selected to have the following properties after hardening:
a- a good connection to the material of the transport tube 1;
b- a good connection to the PU-foam 4;
c- a good connection to the material of the shrink sleeve 40;
d- solid and watertight

As an example, the filling material may comprise a PU-resin, for instance a two component resin. After hardening, which may take about 1 minute to about 60 minutes depending on the chosen material, this material 70 forms a barrier against possible water migrating in the foam 4 (see figure 7).

It is noted that the material of the shrink sleeve is not critical. Suitable examples of thermoplastic materials which are weldable are for instance PE (polyethene / polyethylene), PP (polypropene / polypropylene), PVC (polyvinylchloride), PVDF (polyvinylidene fluoride), E-CTFE (Ethylene - Chloridetrifluorethylene - Copolymere), PFA (perfluoroalkoxy). For a good connection tot the PU-resin, the shrink sleeve is preferably provided with a glass fibre maze at its inner surface. The good connection with the material of the sleeve and with the material of the transport tube prevents a gap from existing where water could creep through. In tests, performed by the "Automatic Adhesion Tester" of the mark: DeFelsko / Positest At-A; sn.AT06631, according tot ASTM D4541/D7234, ISO 4624/16276-1, AS / NZS 1580.408.5, with pulling dollies having a diameter of 20 mm, tearing strengths have been realised of at least 3.5 MPa.

For increasing the adhesion strength between the sleeve 40 (implemented as cylinder or as bent plate) and the filling material 70, the inner surface of the sleeve 40 is preferably pre-treated. The pre-treatment comprises for instance, and preferably, the application of a fibre layer, preferably a glass fibre layer, as described in Dutch patent 1033399.

It is further preferred that the sleeve 40 (implemented as cylinder or as bent plate) is made of an at least partially transparent material, so that it is possible to visually follow the filling of the annular shape 60 with the filling material 70.

The invention further provides some further elaborations for achieving an even better result.

The filling material 70 not only has the function of counteracting migration of water through the insulation foam, but also has a function of protecting and insulating the transporting tube 1. Furthermore, the filling material 70 (resin) is rather expensive. In order to save costs, the present invention proposes that the filling material 70, in any case at the moment of application, consists of a liquid fraction and a grain-shaped fraction. The liquid fraction then is the hardening PU-resin discussed in the above. The grain-shaped material is primarily chosen for having a good adherence with this resin. Depending on the filling degree chosen, i.e. the volume of liquid resin that is replaced by volume grain-shaped material, a saving of costs is achieved. Advantageous examples of suitable materials to be used as grain-shaped fraction are sand, fine gravel, gypsum, stone wool, porous stone, lava stone, wood chips, cork.

The insulation value achieved will also depend on the grain-shaped material chosen. Particularly advantageous results have been obtained with using cork.

It is recommendable for the grains not to be chosen too large. A suitable size for the grains is a diameter of a few millimetres.

It is possible to mix the grain-shaped fraction and the liquid fraction with each other before the filling material 70 is introduced into the annular space 60. However, it is preferred to first introduce the grains into the annular space 60, for instance by suction, such that the annular space 60 is almost entirely filled with the grains, and to then fill the spaces remaining between the grains with the liquid resin.

It should be clear to a person skilled in the art that the invention is not limited to the exemplary embodiments discussed in the above, but that several variations and modifications are possible within the protective scope of the invention as defined in the attached claims. Even if certain features are mentioned in different dependent claims, the present invention also relates to an embodiment which has these features in common. Features which are not explicitly described as being essential may also be omitted. Possible reference numerals used in a claim should not be explained as limiting for the scope of that claim.

## Claims

1. Thermally insulated transport tube (1), provided with an outer tube (2) arranged around the transport tube (1) and an insulation foam (4) arranged in the annular space (3) between the transport tube (1) and the outer tube (2), wherein, in one or multiple positions, a substance (70) is arranged which interrupts the insulation foam in axial direction;
wherein the substance
- has annular shape;
- adheres well to the transport tube
- adheres well to the insulation foam;
wherein the substance is solid and watertight and forms a water barrier against possible water migrating in axial direction in the insulation foam, so that any moisture that possibly penetrated the PU-foam can then migrate in axial direction not further than up to the first water barrier;
**characterized in that**
at said at least one position a shrinking sleeve (40) is attached to the outer tube (2) and wherein said solid and water-tight substance (70) also adheres well to this shrinking sleeve (40) to prevent a gap from existing where water could creep through.

2. Thermally insulated transport tube (1) according to claim 1, wherein the solid and water-tight substance (70) comprises a grain-shaped material embedded therein.

3. Thermally insulated transport tube (1) according to claim 2, wherein the grain-shaped material comprises any one of sand, fine gravel, gypsum, stone wool, porous stone, lava stone, wood chips, or cork.

4. Thermally insulated transport tube (1) according to any of the previous claims, wherein the solid and water-tight substance (70) comprises a hardened PU-resin.

## Patentansprüche

1. Wärmeisoliertes Transportrohr (1), versehen mit einem um das Transportrohr (1) angeordneten Außenrohr (2) und einem im Ringraum (3) zwischen dem Transportrohr (1) und dem Außenrohr (2) angeordneten Isolierschaum (4), wobei an einer oder mehreren Positionen ein Stoff (70) angeordnet ist, der den Isolierschaum in axialer Richtung unterbricht;
wobei der Stoff
- eine ringförmige Form hat;
- gut auf dem Transportrohr haftet
- gut auf dem Isolierschaum haftet;
wobei die Substanz fest und wasserdicht ist und eine Wasserbarriere gegen eventuell in axialer Richtung migrierendes Wasser im Isolierschaum bildet, so dass eventuell in den PU-Schaum eingedrungene Feuchtigkeit dann in axialer Richtung nicht weiter als bis zur ersten Wasserbarriere migrieren kann;
**dadurch gekennzeichnet, dass** an der mindestens einen Position eine Schrumpfmuffe (40) an dem Außenrohr (2) angebracht ist und wobei die feste und wasserdichte Substanz (70) auch gut an dieser Schrumpfmuffe (40) haftet, um zu verhindern, dass ein Spalt entsteht, durch den Wasser kriechen könnte.

2. Wärmeisoliertes Transportrohr (1) nach Anspruch 1, wobei die feste und wasserdichte Substanz (70) ein darin eingebettetes kornförmiges Material umfasst.

3. Wärmeisoliertes Transportrohr (1) nach Anspruch 2, wobei das kornförmige Material aus Sand, feinem Kies, Gips, Steinwolle, porösem Stein, Lavastein, Holzspänen oder Kork besteht.

4. Wärmeisoliertes Transportrohr (1) nach einem der vorhergehenden Ansprüche, wobei die feste und wasserdichte Substanz (70) aus einem gehärteten PU-Harz besteht.

## Revendications

1. Tube de transport (1) isolé thermiquement, pourvu d'un tube extérieur (2) agencé autour du tube de transport (1) et d'une mousse isolante (4) agencée dans l'espace annulaire (3) entre le tube de transport (1) et le tube extérieur (2), dans lequel, dans une ou de multiples positions, une substance (70) est agencée qui interrompt la mousse isolante dans la direction axiale ;
dans lequel la substance
a une forme annulaire ;
adhère bien au tube de transport
adhère bien à la mousse isolante ;
dans lequel la substance est solide et étanche à l'eau et forme une protection contre l'eau contre une migration possible d'eau dans la direction axiale dans la mousse isolante, de telle manière que toute humidité qui aurait possiblement pénétré dans la mousse PU ne puisse pas migrer ensuite dans la direction axiale plus loin que la protection contre l'eau ;
**caractérisé en ce que**
dans ladite au moins une position un manchon rétrécissant (40) est fixé sur le tube extérieur (2) et dans lequel ladite substance (70) solide et étanche à l'eau adhère bien aussi à ce manchon rétrécissant (40) pour empêcher un espace d'exister là où de l'eau pourrait se faufiler.

2. Tube de transport (1) isolé thermiquement selon la revendication 1, dans lequel la substance (70) solide et étanche à l'eau a un matériau en grains incorporée en elle.

3. Tube de transport (1) isolé thermiquement selon la revendication 2, dans lequel le matériau en grains comprend n'importe lequel parmi du sable, du gravier fin, de gypse, de la laine de roche, de la pierre poreuse, de la pierre de lave, des copeaux de bois, ou du liège.

4. Tube de transport (1) isolé thermiquement selon l'une quelconque des revendications précédentes, dans lequel la substance (70) solide et étanche à l'eau comprend une résine PU durcie.
